Europäisches Patentamt

European Patent Office

Office européen des brevets

(11) Veröffentlichungsnummer: **0 338 106 B1**

(12) **EUROPÄISCHE PATENTSCHRIFT**

(45) Veröffentlichungstag der Patentschrift: **20.07.94**

(21) Anmeldenummer: **88106255.8**

(22) Anmeldetag: **20.04.88**

(51) Int. Cl.⁵: **G05B 19/25**, G05B 19/18, G05B 19/403

(54) **Einrichtung zur Bahnregelung eines bewegten Bauteiles, insbesondere eines Bauteiles einer Werkzeugmaschine, über mindestens zwei voneinander abhängige Achsen.**

(43) Veröffentlichungstag der Anmeldung:
**25.10.89 Patentblatt 89/43**

(45) Bekanntmachung des Hinweises auf die Patenterteilung:
**20.07.94 Patentblatt 94/29**

(84) Benannte Vertragsstaaten:
**AT BE CH DE ES FR GB GR IT LI LU NL SE**

(56) Entgegenhaltungen:
**EP-A- 0 046 180**
**EP-A- 0 112 936**
**DE-A- 3 310 619**
**DE-A- 3 340 150**
**GB-A- 2 102 590**

**ELECTRONIOUE INDUSTRIELLE, Nr. 1, Seiten 31-36, Paris, FR; I. HORDEN et al.: "Conception de systèmes structures à partir de microcontroleurs"**

(73) Patentinhaber: **SOUARE D COMPANY (DEUTSCHLAND) GMBH**
**Eichendorffstrasse 2**
**D-51709 Marienheide(DE)**

(72) Erfinder: **Ludwig, Werner, Dipl.-Ing.**
**Breibacher Weg 69**
**D-5067 Kürten(DE)**
Erfinder: **Wiederstein, Gerd-Walter, Dipl.-Ing.**
**Am Hofacker 24**
**D-5270 Gummersbach(DE)**

(74) Vertreter: **Köhne, Friedrich, Dipl.-Ing.**
**Rondorferstrasse 5a**
**D-50968 Köln (DE)**

## Beschreibung

Die Erfindung bezieht sich auf eine Einrichtung zur Bahnregelung eines bewegten Bauteiles, insbesondere eines Bauteiles einer Werkzeugmaschine, über mindestens drei voneinander abhängige Achsen, wobei für die Bewegung einer führenden Achse ein führender Antrieb und für die Bewegung einer geführten Achse ein geführter Antrieb vorgesehen sind und ein Sollwert für die Lage der geführten Achse in Abhängigkeit von der Lage der führenden Achse mittels eines mechanisch mit der führenden Achse gekuppelten Wegistwertgebers sowie ein Istwert für die Lage der geführten Achse mittels eines mechanisch mit der geführten Achse gekuppelten Wegistwertgebers ermittelt und ausschließlich die geführte Achse in ihrer Lage geregelt wird, wobei ferner aus von den Wegistwertgebern gelieferten Taktsignalen mittels einer Zähleinrichtung eine Regeldifferenz gebildet und diese Regeldifferenz einem Lageregler zur Regelung des geführten Antriebs in Abhängigkeit von dem führenden Antrieb zugeführt wird und wobei die von den Wegistwertgebern der führenden und geführten Achse gelieferten Taktsignale Vorzeicheninformationen in Form von Zweiphasentakten enthalten.

Eine Einrichtung dieser Gattung ist aus dem Dokument EP-A-0 112 936 bekannt. Diese Einrichtung hat sich in der Praxis bei einer Mehrzahl von Anwendungen gut bewährt. Bei dieser Einrichtung, bei der es ausschließlich um eine lineare Bahnregelung geht, ist nur ein einziger Zähler vorgesehen, welcher nahe dem Ausgang der gesamten Einrichtung angeordnet ist und welcher die Regeldifferenz ausgibt.

Daneben gibt es aber auch zahlreiche Sonderanwendungen, wie zum Beispiel das gesamte Gebiet der Verzahntechnik, bei denen eine große Leistungsfähigkeit der Einrichtung zur Bahnregelung gefordert wird, das heißt extreme Geschwindigkeiten, Genauigkeiten und eine möglichst große Flexibilität, besonders im Vergleich mit einer fest verdrahteten Einrichtung.

Desweiteren ist aus dem Dokument EP-A-0 046 180 ein Positionsregelsystem mit einer digitalen inkrementellen Meßeinrichtung bekannt, welches durch die Verwendung eines Diskriminators und eines Rechners die Erfassung von langen Wegen bei hoher Auflösung ohne Zähler oder mit nur sehr kurzen Zählern ermöglicht. Das System soll selbsttätig in der Lage sein, Positionen mit vorgewählter Geschwindigkeit oder Beschleunigung anzufahren und für die dafür benutzten Stellgrößen bedarfsweise Prioritäten festzulegen. Die kurzen Zähler mit einer hohen Zählfrequenz dienen zum Erlangen hoher Regel-Geschwindigkeit und -genauigkeit. Bei diesem Positionsregelsystem wird so vorgegangen, daß die von einem Diskriminator gelieferten Meßimpulse zur Ermittlung des erreichten Positionswertes addiert bzw. subtrahiert werden, da jeder Impuls einer gefahrenen Wegstrecke entspricht. Die Meßimpulse lösen über eine Interrupt-Logik eine Unterbrechung des in einem Rechner laufenden Rechnerprogramms aus. Je nach der Bewegungsrichtung wird in den Speicherregistern ein Speicher inkrementiert oder dekrementiert, so daß der Inhalt des Speichers dem gefahrenen Weg entspricht. Je nach Anzahl der zu zählenden Impulse können mehrere Speicher durch ein Mikroprogramm miteinander verbunden werden, um große Zählerlängen zu realisieren. Das bekannte Positionsregelsystem bietet ferner die Möglichkeit, mehrere unabhängig voneinander ablaufende Bewegungen zu erfassen und zu regeln. Zu diesem Zweck wird eine entsprechende weitere Anzahl von Kanälen, die jeweils eine inkrementielle Meßeinrichtung, einen Antrieb und ein Stellglied enthalten, mit demselben Diskriminator verbunden.

Auch weitere Einzelmerkmale sind aus diesem Dokument bekannt, nämlich D/A-Wandler sowie eine Baugruppe Analogausgabe/Reglersperren. Der gesamte Aufbau und die Wirkungsweise des bekannten Positionsregelsystems weichen aber so wesentlich von der zu Anfang angegebenen Einrichtung gemäß dem Stand der Technik ab, daß eine Übertragung einzelner Merkmale oder Baugruppen von dem bekannten Positionsregelsystem auf die zu Anfang angegebene Einrichtung nach dem Stand der Technik nicht möglich ist.

Ausgehend von dem zu Anfang beschriebenen Stand der Technik liegt der Erfindung die Aufgabe zugrunde, eine vom technischen Aufwand her einfache Einrichtung zu schaffen, die eine Bahnregelung mit hoher Geschwindigkeit und Genauigkeit gestattet und die auf die jeweiligen Anwendungsgebiete flexibel anpaßbar bzw. umstellbar ist.

Die gestellte Aufgabe wird erfindungsgemäß dadurch gelöst, daß jeder Achse ein separater kurzer Zähler mit einer hohen Zählfrequenz zugeordnet ist, so daß für jede Achse aus den Zählerständen jeweils zweier aufeinanderfolgender Abtastzeitpunkten ein absolutes Zählergebnis gebildet und die Positionsänderung errechnet wird, daß die Zähler über einen internen Bus an ein Signalprozessorsystem angeschlossen sind, welches so eingerichtet ist, daß die Regeldifferenz für die geführte Achse durch die Addition der Positionsänderungen bei den führenden Achsen errechnet, in einem Abtastregelalgorithmus verarbeitet und daraus eine Stellgröße gebildet wird, welche über einen D/A-Wandler und eine Baugruppe Analogausgabe/Reglersperren dem geführten Antrieb zugeführt wird.

Weitere vorteilhafte Ausgestaltungen der Erfindung ergeben sich aus den Unteransprüchen 2 bis 11.

In der Zeichnung ist ein Ausführungsbeispiel der Erfindung im Schema dargestellt, und zwar zeigen

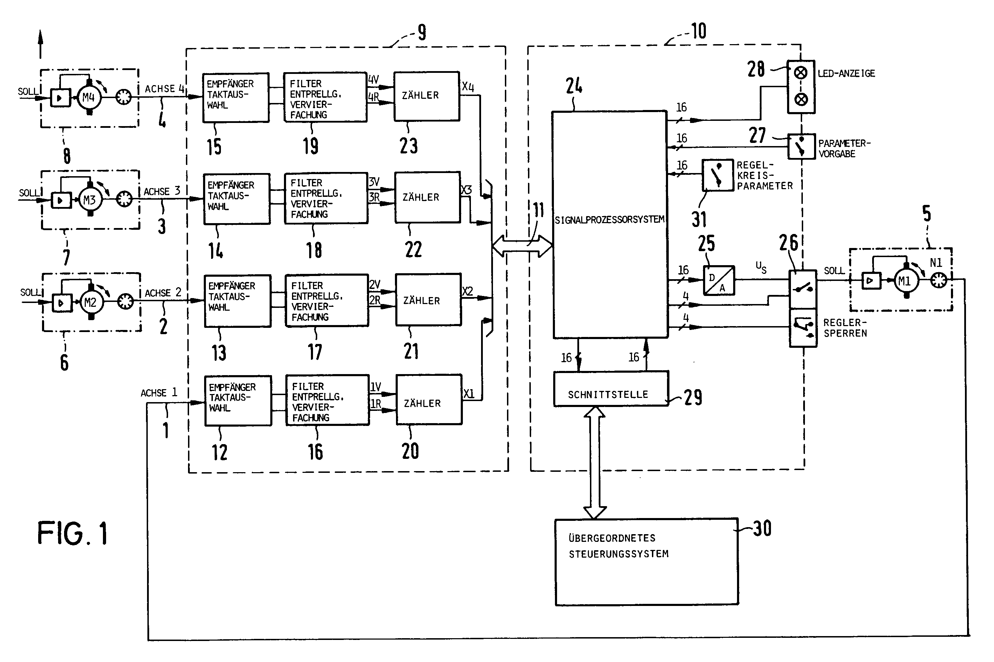

Figur 1 ein Blockschaltbild mit drei führenden Antrieben und einem geführten Antrieb und

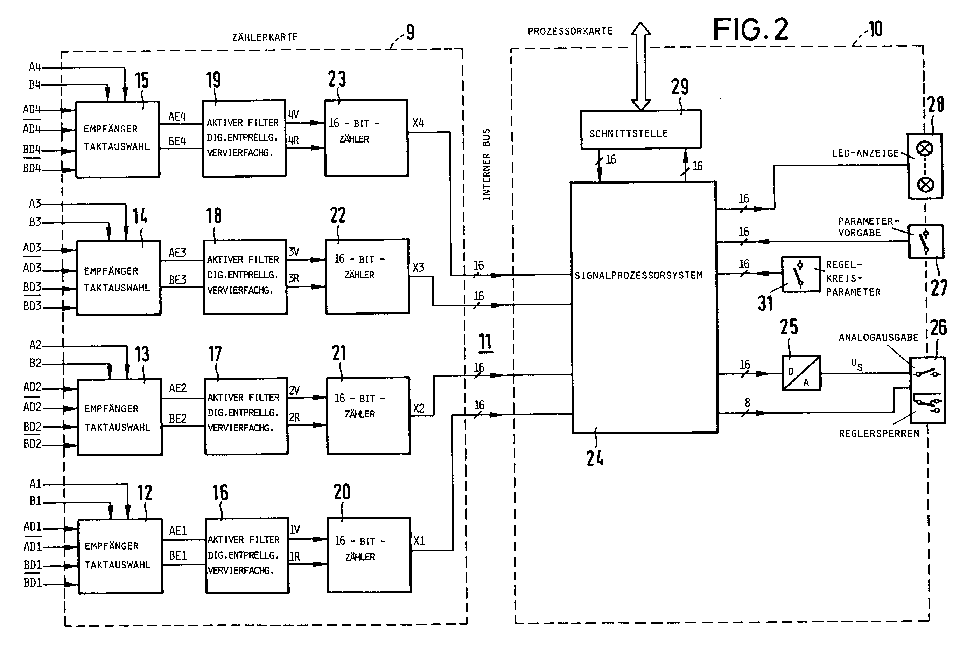

Figur 2 einen Ausschnitt aus dem Blockschaltbild nach Figur 1 in ausführlicherer Darstellungsweise.

Die Zeichnungen Zeigen eine Einrichtung zur Bahnregelung mit beispielsweise vier Achsen 1, 2, 3 und 4 sowie zugehörigen Antrieben 5, 6, 7 und 8, wobei in diesem Ausführungsbeispiel die Achse 1 die geführte Achse und der Antrieb 5 der geführte Antrieb sind, während die Achsen 2, 3 und 4 und die zugehörigen Antriebe 6, 7 und 8 die führenden Achsen bzw. Antriebe sind. Wie weiter unten noch dargelegt wird, kann noch eine Umschaltung vorgenommen werden, so daß auch eine dieser führenden Achsen bzw. einer der führenden Antriebe statt der Achse 1 bzw. des Antriebes 5 zur geführten Achse und zum geführten Antrieb wird. Der wesentliche Teil der erfindungsgemäßen Einrichtung befindet sich auf zwei Karten, nämlich einer Zählerkarte 9 und einer Prozessorkarte 10. Beide Karten können vorteilhafterweise als Steckkarten ausgebildet sein, die auf einer Platine oder einem Board o. dgl. aufsteckbar sind. Auf diese Weise sind die Karten gegebenenfalls leicht auswechselbar. Die Platine erhält dann die Anschlüsse für die äußeren Bauteile, insbesondere für die Antriebe 5 bis 8.

Die Zählerkarte und die Prozessorkarte sind durch einen internen Bus 11 elektrisch miteinander verbunden. Die Zählerkarte 9 enthält je Antrieb drei Baugruppen, im vorliegenden Ausführungsbeispiel vier Baugruppen Empfänger/Taktauswahl 12, 13, 14 und 15, ferner vier Baugruppen Aktiver Filter/Digitale Entsprellung/ Vervierfachung 16, 17, 18 und 19 sowie vier kurze Zähler 20, 21, 22 und 23, für welche vorzugsweise 16 Bit-Zähler ausgewählt sind. Wichtig ist, daß diese Zähler eine hohe Zählfrequenz aufweisen.

Die Prozessorkarte enthält im wesentlichen, angeschlossen über den besagten internen Bus 11, ein Signalprozessorsystem 24, welches so eingerichtet ist, daß die nachfolgend noch näher beschriebene Regeldifferenz errechnet, in einem Abtastregelalgorithmus verarbeitet und eine Stellgröße gebildet wird. Wie die Zeichnung verdeutlicht, sind an das Signalprozessorsystem 24 ein D/A-Wandler 25 und eine Baugruppe Analogausgabe/Reglersperren 26 angeschlossen, über welche die besagte Stellgröße dem geführten Antrieb 5 zugeführt wird. Vorzugsweise wird ein 16 Bit-D/A-Wandler gewählt.

Ferner ist ein Block 31 oder Bauteil vorgesehen, durch welches dem Signalprozessorsystem 24 Regelkreisparameter der geführten Achse 1 vorgegeben werden. Der Block 31 für die Parametervorgabe läßt den Aufruf bestimmter Funktionen durch einen Bediener der Einrichtung zu. Zur Ausgabe von Informationen zum Bediener ist weiterhin ein Block LED-Anzeige 28 vorhanden.

Das Signalprozessorsystem 24 ist mit einer Eingang und Ausgang aufweisenden Schnittstelle 29 für den Anschluß eines übergeordneten Steuerungssystems 30 ausgestattet. Von diesem übergeordneten Steuerungssystem können über die Schnittstelle 29 vor allem Daten und Befehle an die Einrichtung übergeben werden, gegebenenfalls auch Daten abgefragt werden.

Die Wirkungsweise der erfindungsgemäßen Einrichtung ist im wesentlichen folgende. Die Zweiphasentakte von den nicht gezeichneten Pulsgebern der vier Achsen 1 bis 4 werden in jeweils einer Baugruppe Empfänger/Taktauswahl 12 bis 15 empfangen und es kann eine Auswahl zwischen Einfach-Taktsignalen A1, A2, A3 und A4 sowie B1, B2, B3 und B4 und Differenz-Taktsignalen $\overline{AD1}$, AD1 - AD4, $\overline{AD4}$, BD1, $\overline{BD1}$ - BD4, $\overline{BD4}$ vorgenommen werden. Die daraus gebildeten Zweiphasentaktsignale AE1, AE2, AE3, AE4 und BE1, BE2, BE3, BE4 werden der Baugruppe Aktiver Filter/Digitale Entprellung/Vervierfachung 16, 17, 18 und 19 zugeführt. Hier werden sie durch einen enthaltenen aktiven Analogfilter von kurzen Störpulsen befreit und anschließend digital entprellt, Danach werden sie vervierfacht in Vor- /Rücktakte 1V, 2V, 3V, 4V und 1R, 2R, 3R, 4R aufgespalten und der Baugruppe 16-Bit-Zähler 20 bis 23 zugeführt. Hierin wird für jede Achse ein absolutes 16-Bit Zählerergebnis X1, X2, X3, X4 gebildet.

Die Zählergebnisse X1 bis X4 werden von der Baugruppe Signalprozessorsystem 24 zyklisch jeweils nach Ablauf einer Abtastzeit eingelesen. Aus den Zählerständen zweier aufeinander folgender Abtastzeitpunkte k-1 und k wird für jede Achse die Positionsänderung

$$\Delta x = x, k - x, k-1 ; k = 0, 1, 2 \qquad (1)$$

errechnet.

Die Bildung der Regeldifferenz xd für die geführte Achse geschieht durch die Addition dieser Positionsänderungen, die bei den führenden Achsen vorher mit Multiplikatoren Mp2 bis Mp4 multipliziert werden, und zwar nach der folgenden Gleichung, wobei angenommen wird, daß die Achse 1 die geführte Achse ist:

$$xd,k = xd, k-1 - \Delta x 1 + Mp2 . \Delta x2 + Mp3 . \Delta x3 + Mp4 . \Delta x4 \qquad (2)$$

3

Das Signalprozessorsystem 24 verarbeitet die Regeldifferenz xd in einem PID-T1-Abtastregelalgorithmus und bildet die Stellgröße y. Ein stetiger PID-T1-Regeler wird durch die folgende Übertragungsfunktion beschrieben.

$$\frac{y}{xd} = \frac{Kp\ (1\ +\ Tn\ s)\ \ (1\ +\ Tv\ s)}{Tn\ 5\ (1\ +\ T1\ s)}$$

Darin sind die aus der Regelungstechnik an sich bekannten Parameter enthalten:

Kp - Proportionalbeiwert
Tn - Nachstellzeit
Tv - Vorhaltzeit
T1 - Verzögerungszeit

Das Signalprozessorsystem bildet diese Übertragungsfunktion nach , und zwar durch die Differenzengleichung:

y, k = a1 . y, k-1 + a2 . y, k-2 + b0. xd, k + + b1 . xd, k-1 + b2 . xd, k-2

Die Koeffizienten a1, a2, b0, b1, b2 werden aus den Parametern Kp, Tn, Tv und T1 ermittelt. Die Stellgröße y wird über den 16-Bit-D/A-Wandler 25 und die Baugruppe Analogausgabe/Reglersperren 26 dem geführten Antrieb 5 zugeführt.

Mit der Baugruppe Analogausgabe/Reglersperren 26 kann die Stellgröße y wahlweise auf eine der anderen Achsen 2 bis 4, die dann die geführte Achse ist, aufgeschaltet werden. Ferner können die Antriebe 5 bis 8 aller vier Achsen 1 bis 4 über die Reglersperren der Baugruppe Analogausgabe/Reglersperren 26 inaktiv geschaltet werden.

Die oben beschriebenen Vorgänge beziehen sich auf den Fall, daß die Lage der jeweils geführten Achse in linearer Abhängigkeit von wahlweise einer bis drei führenden Achsen geregelt wird.

Außer dieser linearen Lageregelung kann die Lage der geführten Achse auch nach einer quadratischen Funktion in Abhängigkeit von wahlweise einer der drei führenden Achsen geregelt werden. Eine quadratische Regelung bzw. Koppelung zwischen der Lage xf einer führenden Achse und der Lage xg der geführten Achse ist nach folgender Gleichung möglich

$$xg\ =\ Mpf\ .\ xf^2 \qquad (3)$$

Zur Realisierung dieser quadratischen Abhängigkeit wird bei der Berechnung der Regeldifferenz durch das Signalprozessorsystem der lineare Term einer führenden Achse in der obigen Gleichung (2) ersetzt durch einen quadratischen Term:

$$Mpf\ .\ \Delta xf\ \text{wird zu:}\ Mpf\ ((xf,\ k\ +\ xf,\ k\text{-}1)\ .\Delta xf) =\ =\ Mpf\ ((\ xf,\ k)^2\ \text{-}\ (xf,\ k\ \text{-}1)^2) \qquad (4)$$

Die Hilfsstellgröße yH wird durch das Signalprozessorsystem aus den Positionsänderungen der führenden Achsen errechnet:

$$yH,k\ =\ KH\ (Mp2\ .\Delta x2\ +\ Mp3\ .\ \Delta x3\ +\ Mp\ 4\ .\Delta x4) \qquad (5)$$

Hierbei wird die Achse 1 als die geführte Achse angenommen; die Konstante KH wird aus den Regelkreisparametern der geführten Achse errechnet. Die Hilfsstellgröße yH unterstützt den Regelvorgang bei Geschwindigkeitsänderungen. Durch den vorhandenen Block Regelkreisparameter 31 werden die Regelkreisparameter der geführten Achse übergeben.

## Patentansprüche

1. Einrichtung zur Bahnregelung eines bewegten Bauteiles, insbesondere eines Bauteiles einer Werkzeugmaschine, über mindestens drei voneinander abhängige Achsen (1, 2, 3, 4), wobei für die Bewegung einer führenden Achse (2, 3, 4) ein führender Antrieb (6, 7, 8) und für die Bewegung einer geführten Achse (1) ein geführter Antrieb (5) vorgesehen sind und ein Sollwert für die Lage der geführten Achse (1) in Abhängigkeit von der Lage der führenden Achse (2, 3, 4) mittels eines mechanisch mit der führenden Achse (2, 3, 4) gekuppelten Wegistwertgebers sowie ein Istwert für die Lage der geführten Achse (1) mittels eines mechanisch mit der geführten Achse (1) gekuppelten Wegistwertgebers ermittelt und ausschließlich die geführte Achse (1) in ihrer Lage geregelt wird, wobei ferner aus von den Wegistwertgebern gelieferten Taktsignalen mittels einer Zähleinrichtung (9) eine Regeldifferenz gebildet und diese Regeldifferenz einem Lageregler zur Regelung des geführten Antriebs (5) in Abhängigkeit von dem führenden Antrieb (6, 7, 8) zugeführt wird und wobei die von den Wegistwertgebern der führenden und geführten Achse gelieferten Taktsignale Vorzeicheninformationen in Form von Zweiphasentakten enthalten, dadurch gekennzeichnet, daß jeder Achse (1, 2, 3, 4) ein separater kurzer Zähler (20, 21, 22, 23) mit einer hohen Zählfrequenz zugeordnet ist, so daß für jede Achse (1, 2, 3, 4) aus den Zählerständen jeweils zweier aufeinanderfolgender Abtastzeitpunkten ein absolutes Zählergebnis gebildet und die Positionsänderung errechnet wird, daß die Zähler (20, 21, 22, 23) über einen internen Bus (11) an ein Signalprozessorsystem (24) angeschlossen sind, welches so eingerichtet ist, daß die Regeldifferenz für die geführte Achse (1) durch die Additiion der Positionsänderungen bei den führenden Achsen (2, 3, 4) errechnet, in einem Abtastregelalgorithmus verarbeitet und daraus eine Stellgröße gebildet wird, welche über einen D/A-Wandler (25) und eine Baugruppe Analogausgabe/Reglersperren (26) dem geführten Antrieb (5) zugeführt wird.

2. Einrichtung nach Anspruch 1, dadurch gekennzeichnet, daß die Zweiphasentakte von den Wegistwertgebern einer Baugruppe Empfänger/Taktauswahl (12, 13, 14, 15) zugeleitet werden, in welcher eine Auswahl zwischen Einfach-Taktsignalen und Differenz-Taktsignalen vorgenommen wird, und daß die so gebildeten Zweiphasentaktsignale einer Baugruppe Aktiver Filter/Digitale Entprellung/Vervierfachung (16, 17, 18, 19) mit einem aktiven Analogfilter zur Befreiung von kurzen Störpulsen, zur digitalen Entprellung und zur Vervierfachung und Aufspaltung in Vor-/Rücktakte zugeführt werden, bevor sie in die jeweiligen separaten Zähler (20, 21, 22, 23) eingegeben werden.

3. Einrichtung nach Anspruch 1 oder 2, dadurch gekennzeichnet, daß mehrere, vorzugsweise drei, führende Antriebe (6, 7, 8) und ein geführter Antrieb (5) vorgesehen sind.

4. Einrichtung nach einem der vorhergehenden Ansprüche, dadurch gekennzeichnet, daß als Zähler (20, 21, 22, 23) 16 Bit-Zähler und als D/A-Wandler (25) ein 16 Bit-D/A-Wandler vorgesehen sind .

5. Einrichtung nach Anspruch 1, dadurch gekennzeichnet, daß die Lage der geführten Achse (1) nach einer quadratischen Funktion in Abhängigkeit von wahlweise einer von drei führenden Achsen (2, 3, 4) geregelt wird.

6. Einrichtung nach den Ansprüchen 1 bis 3, dadurch gekennzeichnet, daß durch die Analogausgabe der Baugruppe Analogausgabe/Reglersperren (26) die Stellgröße wahlweise auf einen der Antriebe (6, 7, 8), der dann der geführte Antrieb ist, aufschaltbar oder umschaltbar ist.

7. Einrichtung nach einem der vorhergehenden Ansprüche, dadurch gekennzeichnet, daß ein Block (31) oder Bauteil vorgesehen ist, wodurch Regelkreisparameter der geführten Achse übergeben werden.

8. Einrichtung nach einem der Ansprüche 2 bis 7, dadurch gekennzeichnet, daß die Baugruppen Empfänger/Taktauswahl (12, 13, 14, 15), Aktiver Filter/Digitale Entprellung/Vervierfachung (16, 17, 18, 19) und die Zähler (20, 21, 22, 23) auf einer Zählerkarte (9) zusammengefaßt sind.

9. Einrichtung nach einem der vorhergehenden Ansprüche, dadurch gekennzeichnet, daß das Signalprozessorsystem (24) auf einer Prozessorkarte (10) angeordnet ist.

10. Einrichtung nach Anspruch 8 oder 9, dadurch gekennzeichnet, daß die Zählerkarte (9) und / oder die Prozessorkarte (10) auswechselbar sind.

11. Einrichtung nach einem der vorhergehenden Ansprüche, dadurch gekennzeichnet, daß das Signalprozessorsystem (24) mit einer Eingang und Ausgang aufweisenden Schnittstelle (29) für den Anschluß eines übergeordneten Steuerungssystems (30) versehen ist.

**Claims**

1. Device for the path control of a moving component, particularly a component of a machine tool, along at least three interdependent axes (1, 2, 3, 4), a guiding drive (6, 7, 8) being provided for the movement of a guiding axis (2, 3, 4) and a guided drive (5) being provided for the movement of a guided axis (1) and a reference value for the position of the guided axis (1) depending on the position of the guiding axis (2, 3, 4) being ascertained by means of a displacement actual value pick-up mechanically connected to the guiding axis (2, 3, 4) and an actual value for the position of the guided axis (1) being ascertained by means of a displacement actual value pick-up mechanically connected to the guided axis (1) and exclusively the guided axis (1) being controlled in its position, furthermore a control difference being formed from pulse signals supplied by the displacement actual value pick-ups, by means of a counting device (9) and this control difference being supplied to a position controller for controlling the guided drive (5) depending on the guiding drive (6, 7, 8) and the pulse signals supplied by the displacement actual value pick-ups of the guiding and guided axis containing sign information in the form of two-phase pulses, characterised in that associated with each axis (1, 2, 3, 4) is a separate short counter (20, 21, 22, 23) with a high counting frequency, so that an absolute counting result is formed for each axis (1, 2, 3, 4) from the counter readings of respectively two successive scanning instants and the change of position is calculated, that the counters (20, 21, 22, 23) are connected by way of an internal bus (11) to a signal processor system (24), which is set up so that the control difference for the guided axis (1) is calculated by the addition of the changes of position in the case of the guiding axes (2, 3, 4), processed in a scanning control algorithm and a control variable is formed from this, which is supplied by way of a D/A-converter (25) and a component group consisting of an analog output/controller barriers (26) to the guided drive (5).

2. Device according to Claim 1, characterised in that the two-phase pulses are supplied by the displacement actual value pick-ups to an assembly comprising a receiver/pulse selection (12, 13, 14, 15), in which a selection is made between single pulse signals and difference pulse signals, and that the two-phase pulse signals formed in this way are supplied to a group of components comprising an active filter/digital removal of bounce/quadrupling (16, 17, 18, 19) with an active analog filter for the removal of short disturbance pulses, for digital removal of bounce and for quadrupling and splitting into forwards/reverse pulses, before they are input into the respective separate counters (20, 21, 22, 23).

3. Device according to Claim 1 or 2, characterised in that a plurality of, preferably three, guiding drives (6, 7, 8) and one guided drive (5) are provided.

4. Device according to one of the preceding Claims, characterised in that 16 bit-counters are provided as the counters (20, 21, 22, 23) and a 16 bit-D/A-converter is provided as the D/A-converter (25).

5. Device according to Claim 1, characterised in that the position of the guided axis (1) is controlled according to a quadratic function depending on optionally one of three guiding axes (2, 3, 4).

6. Device according to Claims 1 to 3, characterised in that due to the analog output of the group of components comprising analog output/controller barriers (26), the actuating variable can be optionally switched to or changed over at one of the drives (6, 7, 8), which is then the guided drive.

7. Device according to one of the preceding Claims, characterised in that a block (31) or component is provided, due to which control circuit parameters are transferred to the guided axis.

8. Device according to one of Claims 2 to 7, characterised in that the component groups receiver/pulse selection (12, 13, 14, 15), active filter/digital removal of bounce/quadrupling (16, 17, 18, 19) and the counters (20, 21, 22, 23) are combined on a counter card (9).

9. Device according to one of the preceding Claims, characterised in that the signal processor system (24) is located on a processor card (10).

10. Device according to Claim 8 or 9, characterised in that the counter card (9) and/or the processor card (10) are exchangeable.

**11.** Device according to one of the preceding Claims, characterised in that the signal processor system (24) is provided with a junction (29) comprising an input and output, for the connection of a superior control system (30).

**Revendications**

**1.** Dispositif d'asservissement de trajectoire d'un organe en mouvement notamment d'un organe d'une machine-outil, suivant au moins trois axes dépendant les uns des autres (1 2, 3, 4), un dispositif d'entraînement menant (6, 7, 8) étant prévu pour le mouvement d'un axe menant (2,3, 4), et un dispositif d'entraînement mené (5) pour le mouvement d'un axe mené (1), et une valeur de consigne pour la position de l'axe mené (1) en fonction de la position de l'axe menant (2, 3, 4) étant obtenue au moyen d'un capteur de valeur effective de position linéaire couplé mécaniquement à l'axe menant (2, 3, 4), ainsi qu'une valeur effective de la position de l'axe mené (1) au moyen d'un capteur de valeur effective de position linéaire couplé mécaniquement à l'axe mené (1) et uniquement l'axe mené (1) étant asservi en position un signal d'écart d'asservissement étant en outre formé à partir des signaux cadencés fournis par les capteurs de valeur effective de position linéaire au moyen d'un dispositif de comptage (9) et ce signal d'écart d'asservissement étant appliqué à un dispositif d'asservissement de position pour asservir le dispositif d'entraînement mené (5) au dispositif d'entraînement menant (6, 7, 8), les signaux cadencés fournis par les capteurs de valeur effective de position linéaire des axes menant et mené contenant des informations de signe sous la forme de signaux cadencés à deux phases, caractérisé en ce qu'à chaque axe (1, 2, 3, 4) est associé un compteur court distinct (20, 21, 22, 23) à haute fréquence de comptage, de manière que pour chaque axe (1, 2, 3, 4), à partir des états des compteurs à deux instants d'échantillonnage successifs pour chacun d'eux, un résultat absolu de comptage soit formé et le changement de position soit calculé, en ce que les compteurs (20,21,22, 23) sont reliés par un bus interne (11), a un système de traitement de signaux (24) qui est agencé de telle manière que l'écart d'asservissement de l'axe mené (1) est calculé par addition des changements de position des axes menants (2, 3, 4), puis traité par un algorithme d'asservissement échantillonné, et une grandeur réglante en est tirée, qui est appliquée au dispositif d'entraînement mené par l'intermédiaire d'un convertisseur numérique/analogique (25) et d'un ensemble signal de sortie analogique/blocage du dispositif d'asservissement (26).

**2.** Dispositif selon la revendication 1 caractérisé en ce que les signaux cadencés à deux phases des capteurs de valeur effective de position linéaire sont appliqués à un ensemble récepteur/choix du cadencement (12, 13, 14, 15) dans lequel un choix entre des signaux cadencés simples et des signaux cadencés différentiels est effectué, et en ce que les signaux cadencés à deux phases ainsi formés sont appliqués à un ensemble filtre actif/anti-pompage numérique/quadruplement (16, 17, 18, 19) avec un filtre analogique actif pour éliminer les impulsions parasites courtes, pour réaliser l'antipompage numérique et pour effectuer le quadruplement et la division en signaux cadencés de sens avant et arrière avant qu'ils soient fournis au compteur distinct respectif (20, 21, 22, 23).

**3.** Dispositif selon la revendication 1 ou 2, caractérisé en ce que plusieurs, de préférence trois, dispositifs d'entraînement menants (6, 7, 8) et un dispositif d'entraînement mené (5) sont prévus.

**4.** Dispositif selon l'une des revendications précédentes, caractérisé en ce que des compteurs à 16 éléments binaires sont prévus comme compteurs (20, 21, 22, 23) et un convertisseur numérique/analogique à 16 éléments binaires est prévu comme convertisseur numérique/analogique (25).

**5.** Dispositif selon la revendication 1, caractérisé en ce que la position de l'axe mené (1) est asservie selon une fonction quadratique en fonction au choix d'un des trois axes menants (2, 3, 4).

**6.** Dispositif selon les revendications 1 à 3, caractérisé en ce que par l'action du signal de sortie analogique de l'ensemble signal de sortie analogique/blocage du dispositif d'asservissement (26), la grandeur réglante peut être appliquée ou commutée à l'un des dispositifs d'entraînement (6, 7, 8), au choix, qui est alors le dispositif d'entraînement mené.

**7.** Dispositif selon l'une des revendications précédentes, caractérisé en ce qu'un bloc (31) ou un ensemble est prévu, au moyen duquel des paramètres de la boucle d'asservissement de l'axe mené sont transmis.

**8.** Dispositif selon l'une des revendications 2 à 7, caractérisé en ce que les ensembles récepteur/choix du cadencement (12, 13, 14, 15) filtre actif/antipompage numérique/quadruplement (16, 17, 18, 19) et les compteurs (20, 21, 22, 23) sont rassemblés sur une carte de compteurs (9).

**9.** Dispositif selon l'une des revendications précédentes, caractérisé en ce que le système de traitement de signaux (24) est disposé sur une carte de processeur (10).

**10.** Dispositif selon la revendication 8 ou 9, caractérisé en ce que la carte de compteurs et/ou la carte de processeur (10) sont remplaçables.

**11.** Dispositif selon l'une des revendications précédentes, caractérisé en ce que le système de traitement de signaux (24) est muni d'une interface (29) à une entrée et une sortie pour le raccordement à un système de commande hiérarchiquement supérieur (30).

FIG. 1

EP 0 338 106 B1

FIG.2